# FASCICULE DE BREVET EUROPEEN

(11) **EP 0 833 013 B1**
(45) Date de publication et mention de la délivrance du brevet: **10.09.2003**
(21) Numéro de dépôt: 97460040.5
(22) Date de dépôt: 30.09.1997
(51) Int. Cl.: E02F 9/22, B66F 9/22

(54) **Dispositif de commande hydraulique du vérin de levage d'un bras de chargeur agricole**
Vorrichtung zur hydraulischen Kontrolle eines Hebezylinders eines Ladearms eines landwirtschaftlichen Fahrzeugs
Hydraulic control device for a lifting cylinder of an arm of an agricultural loader

(30) Priorité: 30.09.1996 FR 9612093
(43) Date de publication de la demande: 01.04.1998
(73) Titulaire: Mailleux S.A., 35690 Acigne (FR)
(72) Inventeur: Mailleux, Loic, 35000 Rennes (FR)
(74) Mandataire: Le Faou, Daniel

(56) Documents cités:
- FR-A- 1 589 327
- US-A- 2 628 731
- US-A- 4 610 271
- US-A- 5 353 686
- PATENT ABSTRACTS OF JAPAN vol. 010, no. 304 (M-526), 16 octobre 1986 & JP 61 116105 A (SEKITAN ROTENBORI KIKAI GIJUTSU), 3 juin 1986,

## Description

La présente invention concerne un dispositif de commande hydraulique du vérin de levage d'un bras de chargeur agricole, et plus précisément d'un vérin monté de manière à travailler en extension dans le sens du levage du bras.

Le dispositif s'applique plus particulièrement à un chargeur destiné à équiper un tracteur agricole, et constitué d'un bras formé d'une paire de brancards coudés pivotants, dont l'extrémité libre porte un outil préhenseur articulé, de préférence interchangeable, tel qu'un godet, une griffe, des mâchoires pour manipuler des balles de fourrage, une lame, ou une fourche transpalettes.

En général, sur ce type de chargeur, une paire de vérins de levage montés en parallèle sont associés chacun à l'un des brancards constitutifs du bras de levage.

Cependant, dans la présente description et dans les revendications qui suivent, il sera fait état d'un vérin de levage uniquement, étant bien entendu que ce vocable couvre également une paire de vérins.

Les vérins de levage traditionnellement utilisés sont de deux types, à savoir à simple effet ou à double effet.

La commande du vérin de levage se fait au moyen d'un organe de commande, par exemple un levier de manoeuvre, par l'intermédiaire d'une valve distributrice, en général une valve à tiroir.

Lorsqu'on a affaire à un vérin à simple effet, seule la grande chambre du vérin, c'est-à-dire la chambre située du côté du piston opposé à la tige, peut être connectée à la source de haute pression hydraulique, la chambre opposée - ou petite chambre - étant en permanence à la pression atmosphérique.

Ce type de vérin présente l'avantage d'une grande commodité d'utilisation, le levage du bras du chargeur se faisant par amenée de liquide sous pression dans la grande chambre ; au contraire, la descente du bras peut se faire, de manière contrôlée, en faisant communiquer la grande chambre du vérin avec la basse pression (retour du liquide hydraulique au réservoir).

Le bras descend donc simplement par gravité, suivant un mouvement contrôlé par l'opérateur, par commande de la valve, en fonction du débit de retour du liquide hydraulique au réservoir, débit qui dépend de la position du tiroir.

Avec ce type de vérin à simple effet, l'outil vient reposer au sol simplement par gravité lorsque le bras se trouve en position abaissée, ce qui permet notamment de racler le sol, par exemple pour prélever des matières répandues sur celui-ci à l'aide de l'outil, tel qu'un godet notamment.

Un inconvénient du vérin à simple effet, cependant, résulte du fait qu'il n'est pas possible d'utiliser l'outil porté par le bras du chargeur pour effectuer des travaux d'excavation à un niveau plus bas que celui du sol.

En effet, un tel vérin ne permet pas de développer sur l'outil un effort dirigé du haut vers le bas, autre que celui résultant de la gravité, effort qui est nécessaire pour creuser.

L'utilisation d'un vérin à double effet permet de résoudre ce problème.

Cependant, un vérin à double effet, dont la caractéristique est que ses deux chambres peuvent être sélectivement connectées à la source de pression hydraulique, tandis que l'autre chambre est connectée à la basse pression (retour du liquide au réservoir), présente cependant lui aussi certains inconvénients.

L'un de ces inconvénients résulte du fait que le mouvement de descente est obtenu en alimentant la petite chambre du vérin en liquide hydraulique sous pression, alors que la grande chambre est reliée au conduit de retour au réservoir. Ceci signifie qu'une grande partie, voire la totalité du débit de liquide hydraulique sous pression produit par la pompe équipant le tracteur est consacrée à ce mouvement de descente, si bien qu'il n'y a pas, ou presque pas, de débit disponible pour commander d'autres vérins, et notamment le vérin (ou les vérins) de bennage de l'outil.

Il est donc difficile, voire impossible, de contrôler l'orientation de l'outil, au cours du mouvement de descente du bras.

Un autre inconvénient est lié au fait que lorsque l'outil s'est abaissé et est venu à proximité du sol, il n'est pas facile d'assurer qu'il vienne porter exactement contre la surface du sol, si bien que le raclage est une opération délicate. L'outil peut même venir presser contre le sol de manière excessive, en soulevant l'avant du tracteur, ce qui engendre des problèmes de détérioration de l'outil.

Un avantage, en revanche, du vérin à double effet est qu'il permet de réaliser des travaux d'excavation, en enfonçant l'outil dans le sol, en-dessous du niveau du sol, par mise sous pression de la petite chambre du vérin.

On connaît par ailleurs, par le document US-A-2 628 731, un circuit de commande hydraulique des vérins de levage 20, ou de bennage 30 (ceci via une vanne d'aiguillage référencée 41) d'un godet équipant un engin automoteur du genre tracteur.

Ce circuit comprend une unité hydraulique référencée 31, qualifiée de "conventionnelle", et composée d'une pompe hydraulique (source haute-pression), d'un réservoir (source basse-pression) et d'une valve de contrôle à tiroir, dont la structure n'est pas décrite dans le document, mais seulement représentée schématiquement, ce type d'unité hydraulique y étant présumé connu. Il est précisé que le tiroir, référencé 34, peut occuper successivement cinq positions, qui correspondent - lorsque la commande s'adresse aux vérins de levage - au levage, à une position de maintien (ou neutre), à une descente lente, à une descente normale, et à une position flottante. Dans la position dite de descente lente (en anglais : "Slow lower position"), une saignée (en anglais : "bleeder") prévue dans la valve provoque le retour du liquide hydraulique de la grande chambre - ou chambre de levage - des vérins au réservoir, tandis que du liquide est aspiré dans la petite chambre - ou chambre de descente (côté tige) - pour compenser cette évacuation (gavage). La descente du godet se fait alors sous l'effet de la gravité. Il n'est pas précisé d'où provient le liquide de gavage de la petite chambre. il n'est donc pas établi que la pompe soit alors isolée de la valve de contrôle, et qu'elle soit par conséquent disponible pour commander d'autres vérins. La seule certitude déductible du document US-A-2 628 731 est que, dans cette position de descente lente, ladite pompe n'est pas susceptible de commander les vérins de bennage 30, qui en sont déconnectés par la valve d'aiguillage 41.

Par ailleurs, la valve de contrôle 31 est pilotée par un levier pivotant 100 dont les cinq positions - correspondant aux positions précitées du tiroir - sont parfaitement définies par des crans d'arrêt (voir figure 11). Il s'agit donc d'une commande du type " tout ou rien", par laquelle l'opérateur n'a pas de possibilité de contrôler ni de maîtriser les débits ni - corrélativement - les vitesses d'abaissement ou de relevage du godet.

Un objectif de l'invention est de proposer un dispositif de commande hydraulique du vérin de levage qui permette de cumuler les avantages des vérins hydrauliques à simple et double effet tout en en supprimant les inconvénients.

Un autre objectif de l'invention est de permettre à l'opérateur de contrôler et de maîtriser en permanence la position et les vitesses de déplacement des bras du chargeur.

Un autre objectif de l'invention est de rendre disponible la pompe qui génère la haute pression au cours de la phase de descente gravitaire (ou lente), afin de pouvoir l'utiliser à d'autres fins, et en particulier pour commander le ou les vérins de bennage, par exemple.

Comme les dispositifs connus, par exemple par le document JP-A-61 116 105, le dispositif selon l'invention comporte :
- un circuit de distribution hydraulique comprenant une source haute-pression et une source basse-pression ;
- une valve à tiroir connectée, d'une part auxdites sources haute et basse-pression et, d'autre part à chacune des chambres du vérin, la petite chambre du côté de la tige, et la grande chambre du côté opposé à la tige ;
- un système élastique agissant sur le tiroir de valve pour le maintenir normalement dans une position donnée, dite neutre ;
- un organe de commande des mouvements de levage et d'abaissement du bras de chargeur, apte à déplacer le tiroir de valve d'un côté ou de l'autre par rapport à sa position neutre,
cette valve étant ainsi agencée que :
a) lorsque le tiroir se trouve en position neutre, chacune des deux chambres du vérin (sont isolées ;
b) lorsque le tiroir est déplacé dans un sens donné afin de lever le bras par rapport à sa position neutre, la grande et la petite chambre communiquent respectivement avec les sources haute et basse-pression ;
c) lorsque le tiroir est déplacé en sens inverse, afin de descendre le bras, par rapport à sa position neutre, on observe successivement :
   - sur une première partie de la course du tiroir, la mise en communication de chacune des deux chambres du vérin avec la source basse-pression ;
   - sur une seconde partie de la course du tiroir, la mise en communication de la grande chambre avec la source basse-pression et celle de la petite chambre avec la source haute-pression.

Les objectifs mentionnés plus haut sont atteints, conformément à l'invention, grâce au fait que :
- cette valve comprend un corps massif dans lequel peut coulisser ledit tiroir, et que,
d'une part, lors de ladite première partie de course, chacune des deux chambres du vérin peut communiquer avec la source basse-pression via des chambres creusées à l'intérieur du corps de valve et que,
d'autre part, lesdites mises en communication se font par des sections de passage du liquide hydraulique qui sont progressivement variables en fonction de la course de déplacement du tiroir de valve,
de sorte que ces mises en communication, y compris durant ladite première partie de course, peuvent être contrôlées par l'opérateur qui, en fonction de la position qu'il donne au tiroir est capable de maîtriser respectivement l'accélération et la vitesse de levage ou d'abaissement du bras du chargeur ;
le système élastique étant, de plus, ainsi agencé qu'il oppose une résistance progressivement croissante au déplacement du tiroir, aussi bien dans un sens que dans l'autre par rapport à sa position neutre, et qu'il engendre pour l'opérateur une perception sensitive d'un palier d'effort supplémentaire à fournir lorsque le tiroir passe de la première partie à la seconde partie de sa course dans le sens de la descente du bras.

Au cours de la première partie de course de la position b ci-dessus, la source haute pression se trouve donc isolée de la valve à tiroir, de sorte qu'elle peut être utilisée intégralement pour d'autres usages, notamment pour commander un (ou des) vérin(s) de bennage.

Dans un mode de réalisation préféré du dispositif, le système élastique comprend une paire de ressorts d'inégale raideur, et est agencé de telle manière que le plus faible est seul sollicité lorsque le tiroir est déplacé dans le sens du levage ou dans la première partie de course dans le sens de la descente, tandis que dans la seconde partie de course, dans le sens de la descente, le plus fort est également sollicité.

D'autres caractéristiques et avantages de l'invention apparaîtront de la description et des dessins annexés qui en représentent, à simple titre d'exemple non limitatif, un mode de réalisation préféré.

Sur les dessins :
- la figure 1 est une vue en coupe, selon un plan de coupe médian passant par l'axe du tiroir, d'une valve à tiroir équipant le dispositif selon l'invention ;
- la figure 2 est une vue de face schématique d'un tracteur équipé d'un chargeur à commande hydraulique, sur lequel le dispositif peut être avantageusement utilisé ;
- les figures 3 à 6 sont des vues schématiques, à plus petite échelle, de la valve à tiroir de la figure 1, qui est connectée à la fois au circuit de distribution hydraulique et au vérin de levage, la figure 3 représentant le tiroir dans sa position neutre, la figure 4 dans sa position de levage, la figure 5 dans la première partie de course de sa position de descente et la figure 6 dans sa seconde partie de course de la position de descente.

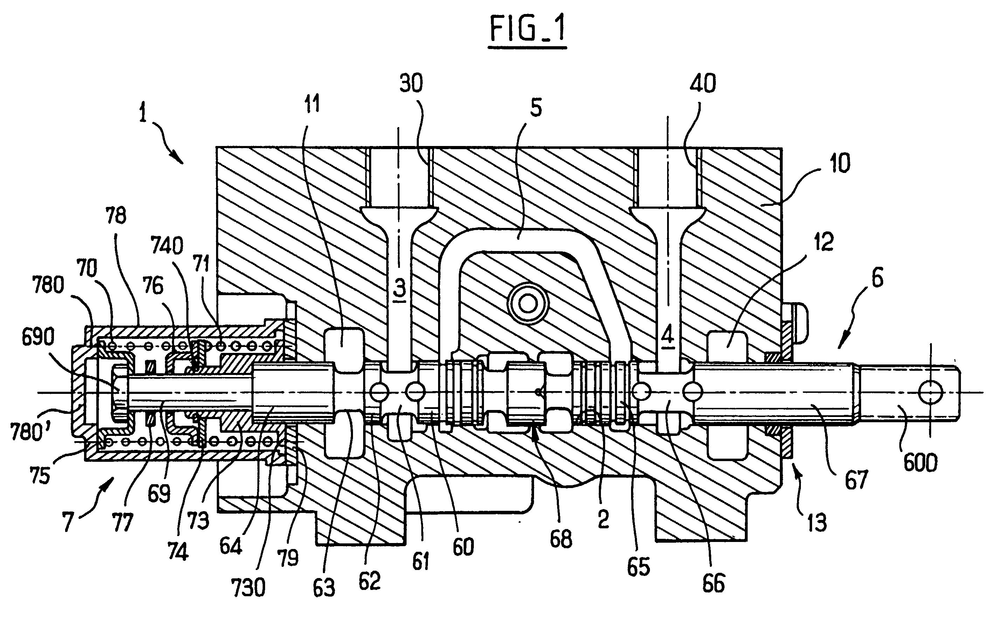

La valve à tiroir, désignée 1, illustrée à la figure 1 est de type général connu, comprenant un corps massif 10, de forme approximativement parallélépipèdique rectangle traversée d'une face à l'autre par un perçage 2, dans lequel peut coulisser, suivant un mouvement de translation axial, un tiroir 6.

Le tiroir 6 affecte la forme générale d'une tige rectiligne qui traverse coaxialement, de part en part le canal 2, et présente plusieurs parties cylindriques de même diamètre, référencées 64, 62, 60, 68, 65, 67, séparées par des parties cylindriques de plus petit diamètre.

Ces parties de plus faible diamètre, ou gorges, vont permettre - comme cela est bien connu - la mise en communication de certaines chambres creusées dans le bloc 10 de la valve, en fonction des déplacements axiaux du tiroir 6.

Dans l'exemple de valve illustré, on a affaire à un mode de distribution dit "pression à suivre", et la zone centrale du tiroir (au niveau de la partie 68) forme la chambre passante réalisant l'étranglement. Cet aspect qui est bien connu en soi de l'homme du métier, et ne concerne pas directement l'objet de l'invention, ne sera pas développé ici, afin de ne pas alourdir inutilement la présente description.

On a désigné par la référence 63 la gorge séparant les parties 64 et 62, par la référence 61 celle qui sépare les parties 60 et 62 ; de l'autre côté, une partie de plus faible diamètre 66 sépare les parties 65 et 67.

Des fentes de progressivité assurent la transition de la gorge 61 avec les parties 60 et 62 et celle de la gorge 66 avec les parties 67 et 65.

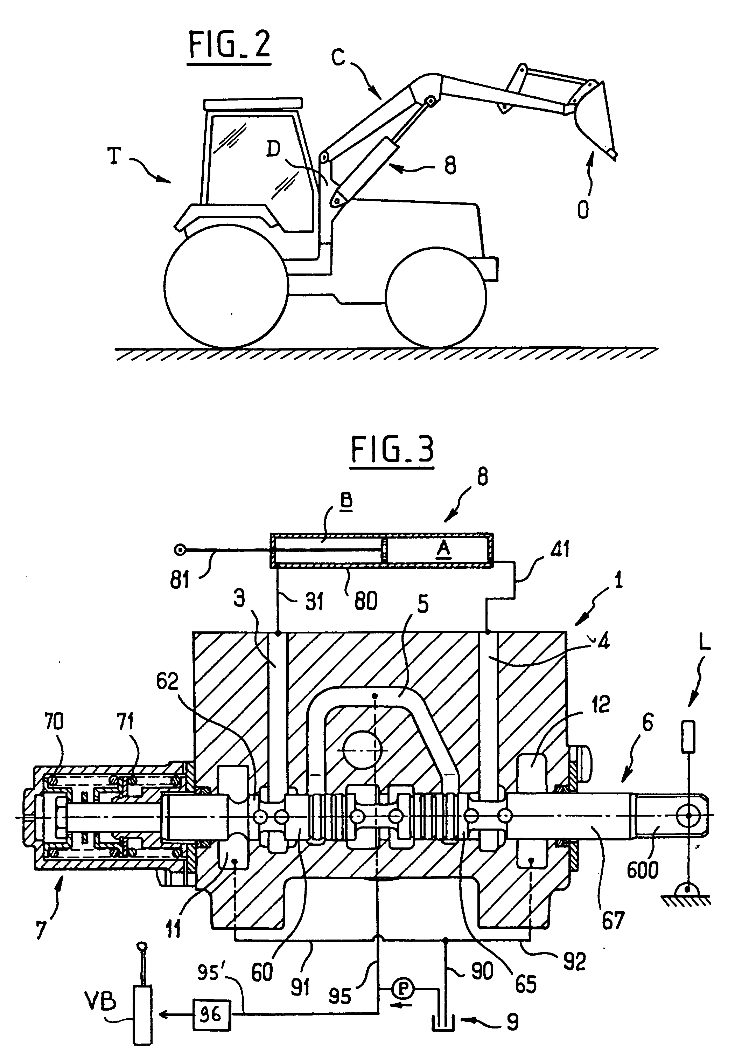

L'une des extrémités du tiroir 6 située sur la droite de la figure, et désignée 600, est destinée à être reliée à un organe de commande, par exemple à un levier articulé, désigné L sur les figures 3 à 6.

A l'autre extrémité est montée une tige filetée coaxiale 69, vissée dans le tiroir, et portant une tête hexagonale 690. A l'intérieur du bloc 10 est creusé un canal en forme générale de "U" dont chacune des extrémités débouche dans le perçage central recevant le tiroir 6.

Comme on le voit sur la figure 1, sur laquelle le tiroir se trouve en position neutre, ce canal 5 débouche normalement au niveau des parties 60, 65, de plus grand diamètre, du tiroir.

Comme on le verra plus loin, le canal 5 est destiné à être branché à la source hydraulique haute-pression, et les portions 60, 65 présentent, de manière bien connue, des gorges annulaires périphériques garnies de joints d'étanchéité appropriés.

En position neutre, le tiroir obture donc les deux embouchures du canal 5.

De part et d'autre de ces zones d'embouchures, sont creusés deux canaux (ou chambres) 3, 4, perpendiculaires à l'axe du tiroir, et qui sortent à l'extérieur de la valve par des trous taraudés 30, respectivement 40, dans lesquels il est possible de visser des embouts de raccordement pour des conduits hydrauliques, afin de brancher la valve au vérin de levage, ceci de manière classique.

Lorsque - comme cela est illustré à la figure 1 - le tiroir se trouve dans sa position neutre, les canaux 3 et 4 débouchent dans le perçage 2, respectivement en face des zones de diamètre réduit 61, 66, lesquelles sont situées vers l'extérieur par rapport aux parties 60 et 65 respectivement.

A l'extérieur des canaux 3 et 4, sont creusées des chambres 11 et 12 respectivement, qui comme on le verra plus loin, sont destinées à être branchées à la source basse-pression, c'est-à-dire à un conduit de retour du liquide hydraulique au réservoir, à la pression atmosphérique.

En position neutre, la chambre 11 se trouve en vis-à-vis d'une portion de petit diamètre 63 ; au contraire, la chambre 12 se trouve en vis-à-vis d'une portion de grand diamètre 67.

Cette partie 67, qui se raccorde à la portion d'extrémité 600, ressort du corps 10, en traversant des organes 13 qui assurent l'étanchéité à ce niveau.

Des moyens d'étanchéité similaires, non représentés, sont prévus à l'extrémité opposée, pour le passage de la partie 64.

Sur ce même côté - sur la droite de la figure - , est monté un système élastique 7 agencé pour assurer le maintien naturel du tiroir dans sa position neutre.

Ce système 7 comprend un manchon cylindrique 78, monté coaxialement au tiroir 6, sur l'extrémité dépassante de celui-ci, constituée par la tige 69.

Le manchon 78 est monté sur une plaque de fond 79, elle-même fixée au bloc 10 par des moyens appropriés, tels que des vis par exemple.

Sur la portion extérieure de la partie cylindrique 64 du tiroir, et sur la tige 69, est monté un manchon cylindrique 73, de forme étagée, présentant vers l'intérieur, une embase 730 qui prend appui contre la plaque de fond 79. A son autre extrémité, le manchon 73 porte une rondelle 74, qui est retenue axialement par un anneau d'arrêt (jonc) 740, lequel empêche son déplacement vers l'extérieur. En revanche, la rondelle 74 peut se déplacer, sur une certaine course, vers l'intérieur, c'est-à-dire vers la droite de la figure 1.

Un ressort de compression hélicoïdal 71, interposé entre la rondelle 74 et l'embase 730, coaxialement à la vis 69, tend à appliquer la rondelle 74 contre l'anneau d'arrêt 740.

Dans le prolongement du ressort 71, se trouve un second ressort de compression hélicoïdal, également coaxial à la vis 69. Celui-ci est interposé entre deux rondelles 75, 76, en forme de cuvettes.

Le manchon 78 est fermé, côté extérieur (sur la gauche de la figure 1) par un fond 780, dont la partie centrale est renfoncée, de manière à présenter une partie 780' décalée vers l'extérieur, en vis-à-vis de la tête de vis 690.

La rondelle 75 prend appui contre la zone périphérique du fond 780, tandis que la rondelle 76 prend appui contre la rondelle 74 déjà mentionnée.

Entre les rondelles 75, 76 en forme de cuvettes, est placée une rondelle intermédiaire 77, librement emmanchée sur la tige 69.

Elle joue le rôle d'entretoise, limitant et calibrant le rapprochement mutuel des deux éléments 75, 76, lorsque le ressort 70 est comprimé au maximum.

On notera que le renfoncement 780' du fond 780 sert de butée de fin de course à la tête hexagonale 690 de la tige filetée 69, et par conséquent au tiroir 6 dont elle est solidaire.

Selon une caractéristique de l'invention, le ressort 71 a une raideur sensiblement plus grande que celle du ressort 70.

A titre indicatif, la longueur totale (y compris la tige filetée 69) du tiroir 6 est de l'ordre de 200 mm, son diamètre maximal est de l'ordre de 15 mm, le diamètre moyen des ressorts 70 et 71 est de l'ordre de 25 mm, la raideur du ressort 70 est de l'ordre de 7 Newton par millimètre et la raideur du ressort 71 de l'ordre de 13 Newton par millimètre.

La figure 2 représente schématiquement un tracteur agricole **T**, à l'avant duquel est monté un chargeur **C**. Celui-ci comprend un bras coudé, composé de deux brancards parallèles (dont l'un seulement est visible sur la vue de face de la figure 2), à l'extrémité libre desquels est monté un outil **O**, tel qu'un godet articulé par exemple.

Un vérin, ou un jeu de vérins, dont l'un seulement est visible sur la figure, référencé 8, interposé entre le châssis **D** de montage du chargeur sur le tracteur et le bras du chargeur permet d'assurer le levage et l'abaissement du bras, ceci de manière bien connue.

Un ou plusieurs vérins additionnels, non représentés, assurent le basculement de l'outil **O** à l'extrémité du bras.

La présente invention se rapporte à la commande hydraulique du vérin 8.

La figure 3 montre de quelle manière la valve 1 est connectée hydrauliquement, d'une part à un circuit de distribution hydraulique, d'autre part au vérin 8.

Sur cette figure, le tiroir 6 se trouve dans la même position que sur la figure 1, c'est-à-dire en position neutre.

Dans cet état de la valve, chacun des deux ressorts 70 et 71 est légèrement précontraint.

Le circuit de distribution hydraulique comprend un réservoir d'huile 9, dans lequel l'huile se trouve à la pression atmosphérique. De manière bien connue, une pompe **P** fournit de l'huile sous pression dans un conduit de distribution 95, la pression étant à titre indicatif, de l'ordre de 180 bars.

Toujours à titre indicatif, le débit de la pompe est compris entre 40 et 120 litres par minute.

Le conduit 95 - qui sera appelé dans la suite "source haute-pression" - se raccorde par un canal approprié, non visible sur les figures, au canal 5 déjà mentionné.

Ce conduit 95 se raccorde aussi, par un conduit secondaire 95', au circuit de commande 96 d'un ou de plusieurs autres vérins, par exemple du (ou des) vérin(s) de bennage **V B**.

Les chambres 11 et 12 de la valve communiquent, via des perçages appropriés, avec des conduits 91, 92 respectivement, ceux-ci se raccordant tous deux à un conduit 90 de retour au réservoir 9, c'est-à-dire de mise à pression atmosphérique.

Dans la suite, les conduits 90, 91 et 92, seront désignés "source basse-pression".

Les canaux 3 et 4 sont reliés respectivement à la petite chambre **B** - côté tige de vérin 81 - et à la grande chambre **A** - côté opposé à la tige - du vérin de levage 8, ceci par l'intermédiaire de conduits 31, 41 respectivement.

Il va de soi que, sur les figures 3 à 6, les dimensions respectives de la valve à tiroirs et du vérin n'ont pas été respectées, le vérin y étant représenté schématiquement et à petite échelle, uniquement pour expliquer le fonctionnement du dispositif.

De même, le circuit de distribution hydraulique est représenté de manière très schématique.

En pratique, les conduits 31 et 41 sont des tuyaux flexibles, qui ne gênent pas le déplacement du vérin au cours des différents mouvements du bras, la valve étant montée sur une partie fixe du tracteur, et le levier de commande **L** se trouvant à portée de main de l'opérateur. Lorsque le tiroir se trouve dans la position neutre de la figure 3, le canal 3 communiquant avec la chambre de vérin **B** est obturé au niveau du tiroir par les parties 60 et 62. L'espace correspondant à la chambre **B** et au canal 3 est donc parfaitement isolé, de l'huile ne pouvant ni y rentrer ni s'en échapper.

De la même manière, la chambre 4 qui communique avec la chambre **A** du vérin est isolé, l'obturation au niveau du tiroir étant assuré par les parties 65 et 67.

Par suite de l'incompressibilité de l'huile, la tige de vérin est donc immobilisée par rapport au corps de vérin, dans une position donnée, dépendant des volumes d'huile contenus respectivement dans les chambres **A** ou **B**.

Dans cet état, le bras du chargeur se trouve par conséquent dans une position bien déterminée en hauteur, parfaitement constante.

Cette situation est requise par exemple lorsqu'il s'agit de transporter une charge portée par l'outil d'un endroit à un autre, sans avoir à la lever ni à l'abaisser.

C'est également le cas lorsque le tracteur, équipé du chargeur, circule "à vide", bras en position haute.

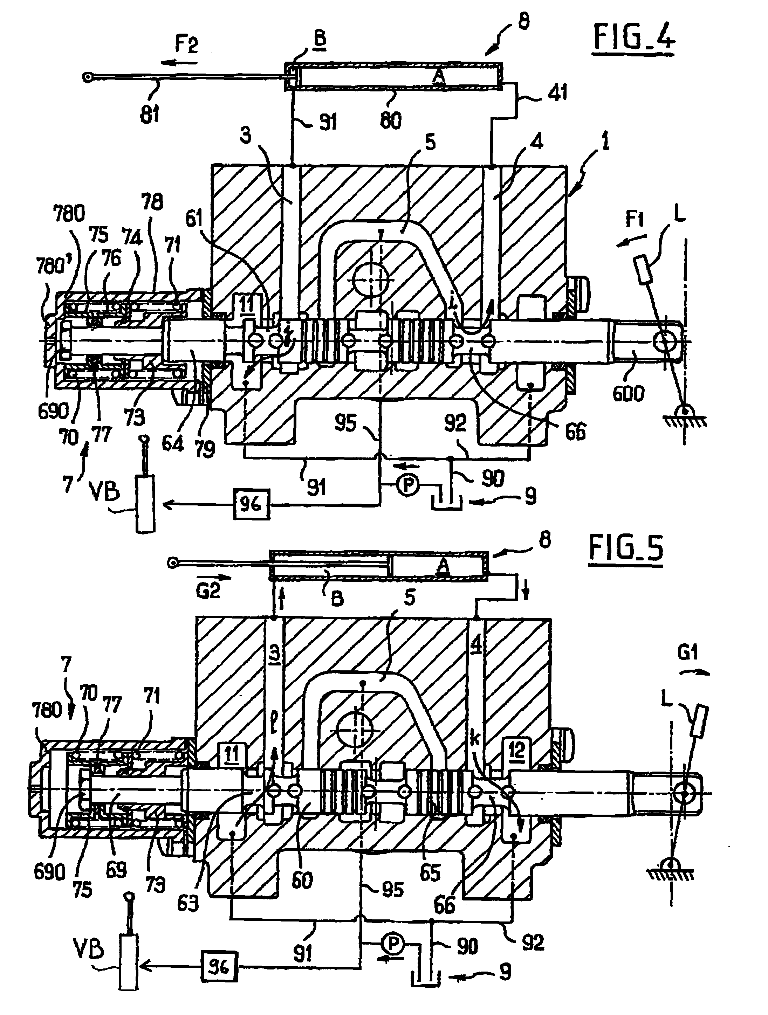

Lorsque l'opérateur souhaite élever le bras du chargeur, il agit sur le levier de commande **L** comme cela est symbolisé par la flèche **F**_{**1**} sur la figure 4, pour déplacer le tiroir 6 vers la gauche.

Ce déplacement provoque la compression du ressort le plus faible, en l'occurrence du ressort 70, tandis que la rondelle 76 se rapproche de la rondelle fixe 75.

Par contre, le ressort 71, de plus grande raideur, ne se déforme pas.

Par suite de ce déplacement vers la gauche du tiroir, la portion 61 de faible diamètre assure une communication entre les chambres 3 et 11, si bien que l'huile peut s'échapper, comme symbolisé par la flèche **j** de la chambre 3 vers le réservoir 9.

La chambre **B** du vérin se trouve donc mise à la pression atmosphérique.

Dans le même temps, la section 66 de faible diamètre fait communiquer le canal haute-pression 5 avec la chambre 4, comme symbolisé par la flèche i, amenant de l'huile sous pression dans la chambre **A**.

On provoque ainsi l'extension du vérin 8, comme symbolisé par la flèche **F**_{**2**}**.**

Le fait que le raccordement des portions de faible diamètre 61 et 66 avec les portions de grand diamètre qui les entourent, se fait par l'intermédiaire de sections progressivement variables, - ou "fentes de progressivité" - permet d'éviter les à-coups, et permet à l'opérateur de contrôler les débits et, corrélativement, les vitesses de levage ou d'abaissement des bras du chargeur.

L'amplitude de compression du ressort 70 étant proportionnelle au déplacement du tiroir, et donc de l'organe de commande **L**, l'opérateur doit vaincre une résistance qui est de plus en plus grande en fonction de la vitesse du levage, ce qui, sur le plan sensitif est favorable à un bon contrôle de l'opération.

La compression maximale du ressort 70 correspond à la mise en butée des rondelles 76 et 75 contre la rondelle centrale 77. Dès cette mise en butée, si le mouvement du tiroir continue, la tête 690 vient en butée contre la partie centrale 780' du fond 780, évitant la sollicitation du second ressort 71.

Quel que soit le degré d'élévation du bras du chargeur, il est possible de l'immobiliser dans sa position en laissant simplement revenir le tiroir en position neutre, ce qui a pour effet d'isoler chacune des deux chambres du vérin.

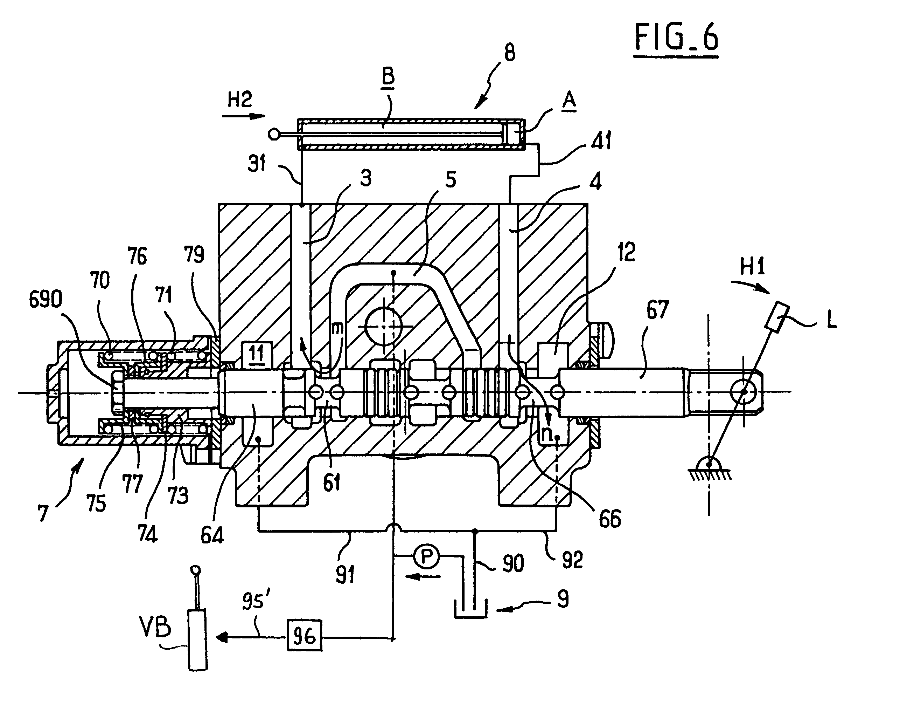

Pour faire descendre le bras, à partir de la position neutre, l'opérateur doit faire pivoter le levier **L** en sens inverse, symbolisé par la flèche **G**_{**1**} sur la figure 5, afin de déplacer le tiroir vers la droite de la figure.

Si ce déplacement se fait sur une course limitée, les deux parties de tiroir 60, 65, obturent encore - comme dans la position neutre - les embouchures du canal sous haute-pression 5.

En revanche, le positionnement de la partie rétrécie 63 est tel que les chambres 11 et 3 sont mises en communication l'une avec l'autre. De la même manière, le positionnement de la partie rétrécie 66 assure la mise en communication de la chambre 4 avec la chambre 12.

Sous l'effet de la gravité, dû au poids du bras de chargeur et de l'outil qu'il supporte, le vérin a tendance à se rétracter, comme symbolisé par la flèche **G**_{**2**} sur la figure 5.

Cette rétraction est effectivement possible, car l'huile peut s'échapper de la grande chambre **A** (soumise à compression) pour retourner au réservoir, via la chambre 4 et la chambre 12 (comme symbolisé par la flèche **k**) tandis que de l'huile est aspirée dans la petite chambre **B** (soumise à dépression), à partir du réservoir, via les chambres 11 et 3 (flèche **I**).

On obtient ainsi un effet régénératif de liquide hydraulique dans le vérin, la chambre **B** côté tige étant gavée automatiquement par suite du vidage côté fond (chambre **A**) sous l'effet de la poussée du piston du vérin, découlant de la force de gravité.

Bien entendu, l'opérateur peut contrôler la vitesse de la descente en déplaçant plus ou moins le tiroir à partir de sa position neutre. Il fait ainsi varier la section offerte au passage de l'huile, maîtrisant ainsi la vitesse de rétraction des vérins.

Ce déplacement se fait à l'encontre de la force du ressort le plus faible 70, la tête 690 entraînant la rondelle 75, qui sert de siège à ce ressort, en direction de l'autre rondelle d'appui 76.

En revanche, le ressort le plus fort, 71, n'est toujours pas déformé.

On remarquera que dans cette situation, le débit de la pompe **P** n'est pas utilisé par le vérin de levage 8 (puisque le canal 5 est isolé).

La source haute pression se trouve déconnectée de la valve 1.

Ce débit disponible peut donc être mis à profit pour commander d'autres vérins, notamment le (ou les) vérin(s) de bennage **VB** de l'outil, qu'il est possible de faire pivoter convenablement au cours de la descente du bras.

On obtient donc ainsi les mêmes avantages que ceux procurés par un vérin à simple effet pour ce qui est du mouvement de descente.

Si l'opérateur poursuit le déplacement du tiroir vers la droite, alors que la compression maximale du ressort 70 a été obtenue, la compression du ressort 71 va commencer, comme cela est illustré sur la figure 6. Ce déplacement supplémentaire du levier L est désigné par la flèche **H**_{**1**} sur la figure.

La rondelle intermédiaire 77 étant prise en sandwich entre les rondelles 75, le ressort 70 ne peut plus se comprimer, et la poursuite du mouvement du tiroir vers la droite va provoquer le déplacement de la rondelle 74 également vers la droite, comprimant le ressort 71.

Ce changement de situation est perceptible par l'opérateur puisqu'il rencontre soudainement une résistance plus grande que précédemment ("palier" ou "marche"), du fait que le ressort 71 est nettement plus raide que le ressort 70, par exemple deux fois plus raide.

Comme cela se comprend à l'observation de la figure 6, ce déplacement supplémentaire du tiroir assure la mise en communication du canal sous pression 5 avec la chambre 3, autorisant l'amenée du liquide sous pression (flèche **m**) dans la chambre 3, puis dans la petite chambre **B** du vérin 8.

Au contraire, la chambre 4 est mise en communication avec la chambre 12, autorisant l'échappement de l'huile de la chambre **A** vers le réservoir (flèche **n**).

On obtient ainsi une action positive du vérin, dans le sens de sa rétraction, comme symbolisé par la flèche **H**_{**2**}**.**

Ceci permet à l'opérateur d'exercer à l'aide de l'outil une pression de haut en bas sur le sol, par exemple pour le creuser. Ceci suppose, bien sûr, que le vérin n'est pas encore rétracté au maximum lorsque l'outil se trouve au niveau du sol.

Dans cette configuration également, l'opérateur doit vaincre une résistance plus ou moins grande qui lui est opposée par l'organe de commande selon le degré de déplacement du tiroir dans la valve, cette résistance étant proportionnelle à l'écrasement du ressort le plus fort 71, et en relation avec l'effort exercé par le chargeur.

On notera que le pilotage de la machine se fait par une action de maintien de l'organe de commande par l'opérateur. Dès que l'organe est relâché, le tiroir revient automatiquement en position neutre, sous l'action du ou des ressort(s) 70, (71), ce qui immobilise le bras du chargeur, et est un facteur de sécurité.

A titre indicatif, la course maximale du tiroir dans le sens "levage" est de l'ordre de 6 mm (déplacement du tiroir vers la gauche des figures).

Dans le sens "descente" elle est de l'ordre de 6 mm pour la première partie de course (compression du ressort 70) et de l'ordre de 5 mm pour la seconde partie de course (compression du ressort 71), soit de 11 mm environ pour la course totale.

Le dispositif qui fait l'objet de la présente invention permet donc de donner au vérin de levage des caractéristiques d'un vérin à simple effet ou à double effet selon la configuration recherchée, en en recueillant les avantages sans en supporter les inconvénients, ceci par des moyens relativement simples et peu coûteux.

## Revendications

1. Dispositif de commande hydraulique du vérin de levage apte à être monté comme bras de chargeur agricole de telle façon que le vérin travaille en extension dans le sens du levage du bras, qui comporte :
- un circuit de distribution hydraulique comprenant une source haute-pression (95) et une source basse-pression (90) ;
- une valve à tiroir (1) connectée, d'une part auxdites sources haute et basse-pression (95, 90) et, d'autre part à chacune des chambres du vérin (8), la petite chambre (B) du côté de la tige, et la grande chambre (A) du côté opposé à la tige ;
- un système élastique (7) agissant sur le tiroir de valve (6) pour le maintenir normalement dans une position donnée, dite neutre ;
- un organe (L) de commande des mouvements de levage et d'abaissement du bras de chargeur, apte à déplacer le tiroir de valve (6) d'un côté ou de l'autre par rapport à sa position neutre,
cette valve étant ainsi agencée que :
a) lorsque le tiroir (6) se trouve en position neutre, chacune des deux chambres (A, B) du vérin (8) sont isolées ;
b) lorsque le tiroir est déplacé dans un sens donné afin de lever le bras par rapport à sa position neutre, la grande et la petite chambre (A, B) communiquent respectivement avec les sources haute et basse-pression (95, 90) ;
c) lorsque le tiroir (6) est déplacé en sens inverse, afin de descendre le bras, par rapport à sa position neutre, on observe successivement :
- sur une première partie de la course du tiroir (6) , la mise en communication de chacune des deux chambres (A, B) du vérin avec la source basse-pression (90) ;
- sur une seconde partie de la course du tiroir (6), la mise en communication de la grande chambre (A) avec la source basse-pression (90) et celle de la petite chambre (B) avec la source haute-pression (95),
**caractérisé par le fait que**:
cette valve comprend un corps massif dans lequel peut coulisser ledit tiroir (6), et que,
d'une part, lors de ladite première partie de course, chacune des deux chambres (A,B) du vérin peut communiquer avec la source basse-pression via des chambres (4-12; 11-3) creusées à l'intérieur du corps de valve (10) et que,
d'autre part, lesdites mises en communication se font par des sections de passage du liquide hydraulique qui sont progressivement variables en fonction de la course de déplacement du tiroir de valve (6),
de sorte que ces mises en communication, y compris durant ladite première partie de course, peuvent être contrôlées par l'opérateur qui, en fonction de la position qu'il donne au tiroir est capable de maîtriser respectivement l'accélération et la vitesse de levage ou d'abaissement du bras du chargeur;
le système élastique (7) étant, de plus, ainsi agencé qu'il oppose une résistance progressivement croissante au déplacement du tiroir (6), aussi bien dans un sens que dans l'autre par rapport à sa position neutre, et qu'il engendre pour l'opérateur une perception sensitive d'un palier d'effort supplémentaire à fournir lorsque le tiroir (6) passe de la première partie à la seconde partie de sa course dans le sens de la descente du bras.

2. Dispositif selon la revendication 1, **caractérisé par le fait qu'**au cours de la première partie de course de la position (b) ci-dessus, la source haute pression (95) se trouve isolée de la valve à tiroir (1), de sorte qu'elle peut être utilisée intégralement pour d'autres usages, notamment pour commander un (ou des) vérin(s) de bennage (VB).

3. Dispositif selon la revendication 1 ou 2, **caractérisé par le fait que** ledit système élastique comprend une paire de ressorts (70, 71) ayant des raideurs sensiblement inégales, et est agencé de telle manière que le plus faible (70) est seul sollicité lorsque le tiroir (6) est déplacé dans le sens du levage ou dans la première partie de course dans le sens de la descente, tandis que dans la seconde partie de course le plus fort (71) est également sollicité.

## Patentansprüche

1. Hydraulische Steuervorrichtung für einen Hubzylinder, der dafür eingerichtet ist, als landwirtschaftlicher Ladearm derart angeordnet zu sein, dass der Hubzylinder bei seiner Streckung in Richtung des Anhebens des Armes arbeitet, wobei sie aufweist:
- einen hydraulischen Verteilerkreis mit einer Hochdruckquelle (95) und einer Niederdruckquelle (90);
- ein Schieberventil (1), das einerseits mit der Hochdruck- und der Niederdruckquelle (95, 90) und andererseits mit jeder der Kammern des Zylinders (8) verbunden ist, wobei die kleine Kammer (B) auf der Seite der Stange und die große Kammer (A) auf der Seite liegt, die der Stange gegenüberliegt;
- ein elastisches System (7), das auf den Ventilschieber (6) einwirkt, um ihn normalerweise in einer gegebenen, so genannten neutralen Position zu halten;
- ein Organ (L) zur Steuerung der Anhebe- und Absenkbewegungen des Ladearmes, welches dafür eingerichtet ist, den Ventilschieber (6) auf der einen oder der anderen Seite bezüglich seiner neutralen Position zu verschieben;
wobei dieses Ventil so angeordnet ist, dass
a) wenn sich der Schieber (6) in der neutralen Position befindet, jede der beiden Kammern (A, B) des Zylinders (8) isoliert ist;
b) wenn der Schieber in einer gegebenen Richtung verschoben wird, um den Arm bezüglich seiner neutralen Position anzuheben, die große und die kleine Kammer (A, B) jeweils mit der Hochdruck- und der Niederdruckquelle (95, 90) in Verbindung stehen;
c) wenn der Schieber in umgekehrter Richtung verschoben wird, um den Arm bezüglich seiner neutralen Position abzusenken, nacheinander zu beobachten ist:
- in einem ersten Teil des Laufes des Schiebers (6) wird jede der beiden Kammern (A, B) des Zylinders mit der Niederdruckquelle (90) in Verbindung gebracht;
- in einem zweiten Teil des Laufes des Schiebers (6) wird die große Kammer (A) mit der Niederdruckquelle (90) und die kleine Kammer (B) mit der Hochdruckquelle (95) verbunden,
**dadurch gekennzeichnet, dass**:
dieses Ventil einen massiven Körper aufweist, in welchem der Schieber (6) gleiten kann, und dass
einerseits während des ersten Teils des Laufes jede der beiden Kammern (A, B) des Zylinders mit der Niederdruckquelle über die im Inneren des Ventilkörpers (10) ausgehöhlten Kammern (4-12; 11-3) in Verbindung stehen kann, und dass
andererseits die Verbindungen durch Durchgangsabschnitte für die Hydraulikflüssigkeit hergestellt werden, die fortschreitend, abhängig von dem Bewegungsverlauf des Ventilschiebers (6) variabel sind,
so dass diese Verbindungsherstellungen, einschließlich während des ersten Laufabschnitts, von dem Bediener gesteuert werden können, der in Abhängigkeit von der Position, die er dem Schieber gibt, in der Lage ist, jeweils die Beschleunigung und die Anhebe- oder Absenkgeschwindigkeit des Ladearmes zu steuern;
wobei das elastische System (7) außerdem derart angeordnet ist, dass es der Verschiebung des Schiebers (6) sowohl in der einen als auch in der anderen Richtung bezüglich seiner neutralen Position einen zunehmend größeren Widerstand entgegensetzt, und dass es für den Bediener eine Sinneswahrnehmung einer zusätzlichen, zu erbringenden Anstrengungsstufe erzeugt, wenn der Schieber (6) von dem ersten Teil in den zweiten Teil seines Laufes In Richtung des Absenkens des Armes übergeht.

2. Vorrichtung gemäß Anspruch 1, **dadurch gekennzeichnet, dass** während des ersten Teils des Laufes aus der oben genannten Position (b) die Hochdruckquelle (95) von dem Schieberventil (1) isoliert ist, so dass sie vollständig für weitere Verwendungen eingesetzt werden kann, insbesondere zur Steuerung eines (oder der) Kippzylinder(s) (VB).

3. Vorrichtung gemäß Anspruch 1 oder 2, **dadurch gekennzeichnet, dass** das elastische System ein Paar Federn (70, 71) mit praktisch ungleichen Federhärten aufweist und derart angeordnet ist, dass die schwächere Feder (70) allein beansprucht wird, wenn der Schieber (6) in Richtung des Anhebens oder auf dem ersten Laufabschnitt in Richtung des Absenkens verschoben wird, während in dem zweiten Laufabschnitt auch die stärkere Feder (71) beansprucht wird.

## Claims

1. A hydraulic control device for controlling the lifting actuator suitable for being mounted as an agricultural loader arm in such a manner that the actuator operates in extension in the arm-lifting direction, the control device comprising:
· a hydraulic distribution circuit comprising a high pressure source (95) and a low pressure source (90);
· a slide valve (1) connected firstly to said high and low pressure sources (95, 90) and secondly to each of the chambers of the actuator (8), the small chamber (B) beside the rod, and the large chamber (A) on the side away from the rod;
· an elastic system (7) acting on the valve slide (6) to maintain it normally in a given "neutral" position;
· a control member (L) for controlling the lifting and lowering movements of the loader arm, suitable for moving the valve slide (6) to one side or the other of its neutral position,
the valve thus being arranged so that:
a) when the slide (6) is in its neutral position, both of the chambers (A, B) of the actuator (8) are isolated;
b) when the slide is moved from its neutral position in a given direction in order to lift the arm, the large and small chambers (A, B) communicate respectively with the high and low pressure sources (95, 90); and
c) when the slide (6) is moved in the opposite direction from its neutral position in order to lower the arm, the following is observed in succession:
· over a first fraction of the stroke of the slide (6), both of the chambers (A, B) of the actuator are put into communication with the low pressure source (90); and
· over a second fraction of the stroke of the slide (6), the large chamber (A) is put into communication with the low pressure source (90) and the small chamber (B) is put into communication with the high pressure source (95),
the device being **characterized by** the facts that:
said valve comprises a massive body in which said slide (6) can slide, and that:
firstly during said first fraction of the stroke, each of the two chambers (A, B) of the actuator can communicate with the low pressure source via chambers (4-12; 11-3) hollowed out inside the valve body (10); and that
secondly said communication is established via hydraulic liquid flow sections that vary progressively as a function of the displacement stroke of the valve slide (6);
such that the operator can control said putting into communication, including during said first fraction of the stroke, the operator being capable, as a function of the position given to the slide, of controlling respectively the acceleration and the lifting or lowering speed of the loader arm;
the elastic system (7) also being arranged to oppose progressively increasing resistance to displacement of the slide (6) in both directions going away from its neutral position, thereby giving the operator a perceptible feeling of an additional amount of force to be provided when the slide (6) goes from the first fraction of its stroke to the second in the arm-lowering direction.

2. A device according to claim 1, **characterized by** the fact that during the first fraction of the stroke from the above position (b), the high pressure source (95) is isolated from the slide valve (1) so as to leave it free for use in full for other purposes, in particular for controlling one (or more) tipping actuator(s) (VB).

3. A device according to claim 1 or claim 2, **characterized by** the fact that the elastic system comprises a pair of springs (70, 71) of significantly different stiffnesses, and is arranged in such a manner that the weaker spring (70) is the only spring engaged when the slide (6) is moved in the lifting direction or over the first fraction of its stroke in the lowering direction, with the stronger spring (71) also being engaged over the second fraction of the stroke.
